# EUROPEAN PATENT APPLICATION

(11) **EP 3 754 579 A1**
(43) Date of publication of application: **23.12.2020**
(21) Application number: 20153536.6
(22) Date of filing: 24.01.2020
(51) Int. Cl.: G06Q 20/32, G06K 19/06, G06K 7/10, G06K 7/14

(54) **BARCODE GENERATION DEVICE AND BARCODE GENERATION METHOD**

(30) Priority: 18.06.2019 JP 2019112965
(71) Applicant: Toshiba TEC Kabushiki Kaisha, Shinagawa-ku Tokyo 141-8562 (JP)
(72) Inventor: Kakino, Tomonari, Shinagawa-ku, Tokyo 141-8562 (JP)
(74) Representative: Bandpay & Greuter

(57) **Abstract**

According to one embodiment, a barcode generation device includes an interface and a processor. The interface receives a barcode display instruction. The processor generates a basic barcode in response to the display instruction received by the interface, generates a plurality of barcodes in which noise is superimposed at different positions on the basic barcode, determines whether there is misreading in an image scanned by a barcode reader on a screen on which the plurality of barcodes are sequentially displayed, and sequentially displays the plurality of barcodes on a display device when it is determined that there is no misreading.

## Description

### FIELD

Embodiments described herein relate generally to a barcode generation device and a barcode generation method.

### BACKGROUND

In recent years, solutions using barcodes displayed by portable terminals such as smartphones as substitutes of coupons or entrance tickets have been widespread. However, barcodes displayed on displays have a risk of illegal use or distribution by copy or the like using capturing functions on display screens or digital cameras.

### BRIEF DESCRIPTION OF THE DRAWINGS

FIG. 1 is a block diagram illustrating a configuration example of a portable terminal serving as a barcode generation device according to a first embodiment;
FIG. 2 is a diagram illustrating an example of a program stored in a memory of the barcode generation device according to the first embodiment;
FIG. 3 is a diagram illustrating examples of a plurality of barcode images generated by the barcode generation device according to the first embodiment;
FIG. 4 is a diagram illustrating examples of display control on the plurality of barcode images generated by the barcode generation device and scanned images by a barcode reader according to the first embodiment;
FIG. 5 is a flowchart illustrating an operation example of a barcode display process by a portable terminal serving as the barcode generation device according to the first embodiment;
FIG. 6 is a block diagram illustrating a configuration example of a server serving as the barcode generation device according to a modification example of the first embodiment;
FIG. 7 is a flowchart illustrating an operation example of a barcode display process by a server serving as the barcode generation device according to a modification example of the first embodiment;
FIG. 8 is a diagram illustrating a first example of a plurality of split barcodes generated by a barcode generation device according to a second embodiment;
FIG. 9 is a diagram illustrating a second example of a plurality of split barcodes generated by a barcode generation device according to the second embodiment;
FIG. 10 is a flowchart illustrating an operation example of a barcode display process by a portable terminal serving as the barcode generation device according to the second embodiment; and
FIG. 11 is a flowchart illustrating an operation example of a barcode display process by a server serving as the barcode generation device according to a modification example of the second embodiment.

### DETAILED DESCRIPTION

Embodiments provide a barcode generation device and a barcode generation method which are capable of preventing the illegal use of a barcode.

In general, according to one embodiment, a barcode generation device includes an interface and a processor. The interface receives a barcode display instruction. The processor generates a basic barcode in response to the display instruction received by the interface, generates a plurality of barcodes in which noise is superimposed at different positions on the basic barcode, determines whether there is misreading in an image scanned by a barcode reader on a screen on which the plurality of barcodes are sequentially displayed, and sequentially displays the plurality of barcodes on a display device when it is determined that there is no misreading.

Preferably, to determine whether there is the misreading comprises to determine whether there is misreading in each of images of a plurality of barcodes in which the noise is superimposed.

Preferably, to determine whether there is the misreading comprises to determine whether there is misreading in a combined image which is obtained when the plurality of sequentially displayed barcodes are scanned.

Preferably, the basic barcode is generated so as to be decodable by a barcode reader.

Preferably, the plurality of barcodes is generated so as to be undecodable by a barcode reader.

Preferably, the display device is a smartphone.

The present invention further relates to a barcode generation device, comprising: an interface configured to receive a barcode display instruction; and
a processor configured to generate a basic barcode in response to the barcode display instruction received by the interface, generate a split barcode image group in which the basic barcode is split into a plurality of images that are singly undecodable, and sequentially display the split barcode image group on a display device.

Preferably the split barcode image group comprises an image group in which the basic barcode is split so that partial regions overlap between adjacent regions.

Preferably, the basic barcode is generated so as to be decodable by a barcode reader.

Preferably, the split barcode image group is generated so as to be undecodable by a barcode reader.

Preferably, the display device is a smartphone.

The present invention also relates to a barcode generation method, comprising:
generating, by a processor, a basic barcode in response to a barcode display instruction received;
generating, by a processor, a plurality of barcodes in which noise is superimposed at different positions on the basic barcode;
determining, by a processor, whether there is a misreading in an image scanned by a barcode reader on a screen on which the plurality of barcodes are sequentially displayed; and
sequentially displaying the plurality of barcodes on a display device when a determination indicates that there is no misreading.

The barcode generation method may further comprise:
determining, by a processor, whether there is a misreading in each of images of a plurality of barcodes in which the noise is superimposed, and
determining, by a processor, whether there is a misreading in a combined image which is obtained when the plurality of sequentially displayed barcodes are scanned.

Preferably, the basic barcode is generated so as to be decodable by a barcode reader.

Preferably, the plurality of barcodes is generated so as to be undecodable by a barcode reader.

Preferably, the display device is a smartphone.

The present invention further relates to a barcode generation method, comprising:
generating, by a processor, a basic barcode in response to a barcode display instruction;
generating, by a processor, a split barcode image group in which the basic barcode is split into a plurality of images that are singly undecodable; and
sequentially display the split barcode image group on a display device.

Preferably, the split barcode image group comprises an image group in which the basic barcode is split so that partial regions overlap between adjacent regions.

Preferably, the basic barcode is generated so as to be decodable by a barcode reader.

Preferably, the split barcode image group is generated so as to be undecodable by a barcode reader.

Preferably, the display device is a smartphone.

Hereinafter, embodiments will be described with reference to the drawings.

A barcode generation device according to each embodiment generates a barcode displayed on a display of a portable terminal such as a smartphone, a mobile phone, or a tablet PC. The barcode generation device may be a portable terminal or a computer such as a server capable of communicating with a portable terminal. In the first and second embodiments described below, a case of a portable terminal and a case of a server as the barcode generation device will be described.

### (First Embodiment)

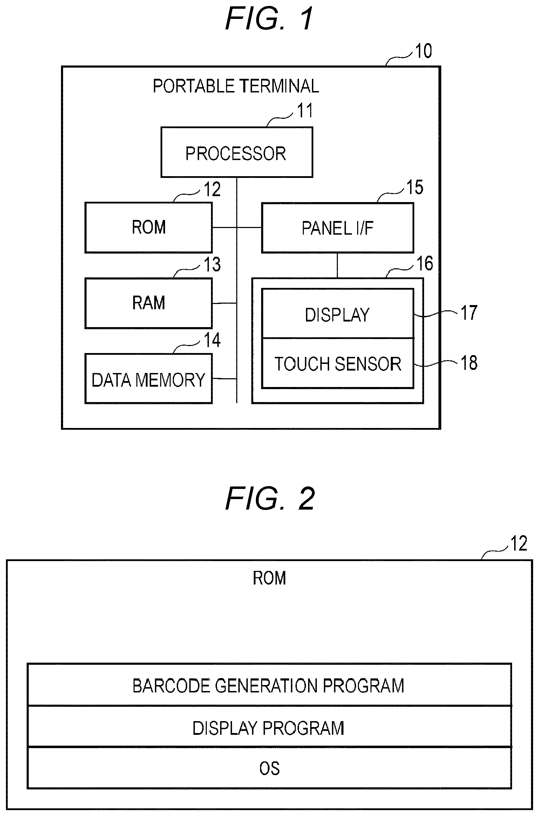

FIG. 1 is a block diagram illustrating a configuration example of a portable terminal 10 serving as a barcode generation device according to the first embodiment.

As illustrated in FIG. 1, the portable terminal 10 includes a processor 11, a read-only memory (ROM) 12, a random access memory (RAM) 13, a data memory 14, an interface (panel interface) 15, and a touch panel 16. The processor 11 is connected to the ROM 12, the RAM 13, the data memory 14, and the panel interface 15. The touch panel 16 includes a display 17 and a touch sensor 18. The touch panel 16 is connected to the processor 11 via the panel interface 15.

The processor 11 performs various processes by executing programs. The processor 11 is, for example, a central processing unit (CPU). The processor 11 realizes various processing functions by executing programs stored in the ROM 21 or the data memory 14. For example, the processor 11 generates a barcode image to be displayed on the display by executing a barcode generation program. The processor 11 displays the generated barcode image on the display 17 by executing a barcode display program.

The ROM 12 is a non-volatile memory. The ROM 12 stores programs and data. For example, the ROM 12 stores programs such as an operating system, middleware, and applications. The ROM 12 may store data which is referred to when the processor 11 performs various processes.

The RAM 13 stores working data. The RAM 13 is a memory used as a so-called work area. The RAM 13 appropriately stores data which is referred to or data which is temporarily used when the processor 11 performs various programs.

The data memory 14 is a rewritable nonvolatile memory. The data memory 14 is configured with, for example, a memory (storage device) such as an electric erasable programmable read-only memory (EEPROM) (registered trademark), a hard disk drive (HDD), a solid-state drive (SSD), and a memory card.

The panel interface 15 is connected to the touch panel 16. The touch panel 16 is an example of a display device connected to an interface in the portable terminal 10. In the example illustrated in FIG. 1, the touch panel 16 includes the display 17 as a display unit and the touch sensor 18 as an operation unit. The display device connected to the interface in the portable terminal 10 may be a display device capable of displaying a barcode image or may not be a touch panel that includes a touch sensor.

The touch interface 15 connects the processor 11 to the display 17 and the touch sensor 18 in the touch panel 16. The processor 11 controls an image displayed on the display 17 via the panel interface 15. The processor 11 acquires an input signal (operation signal) detected by the touch sensor 18 via the panel interface 15. The panel interface 15 is an example of an interface that receives a barcode display instruction input on the touch panel 16.

Next, a program executed by the processor 11 of the portable terminal 10 will be described.

Programs that are executed by the processor 11 are installed in the ROM 12 or the data memory 14. For example, the processor 11 executes a program of an operating system (OS) that manages a basic operation of the portable terminal 10. The processor 11 executes various application programs after the OS is executed.

FIG. 2 is a schematic diagram illustrating an example of a program group stored in the ROM 12 of the portable terminal 10 according to the first embodiment.

As illustrated in FIG. 2, the ROM 12 stores various programs that are executed by the processor 11. In the example illustrated in FIG. 2, the ROM 12 stores an operating system (OS), a barcode display program, and a barcode generation program. The OS is a program that manages a basic operation of the portable terminal 10. The processor 11 can execute an application program that is based on the OS by executing the OS. For example, the barcode display program and the barcode generation program may be generated as application programs operated on the OS.

The barcode display program and the barcode generation program are an application program for realizing operations described below according to the first embodiment.

The barcode display program is a program for displaying barcodes on a display device. The processor 11 realizes display control of barcode images described below by executing the barcode display program.

The barcode generation program is a program for generating barcodes. The processor 11 generates a basic barcode described below and generates a plurality of barcode images for display by executing the barcode generation program.

Here, the programs illustrated in FIG. 2 may be stored in a memory so as to be executed by the processor 11 or may be stored in a memory such as the data memory 14 other than the ROM 12. For example, the OS may be stored in the ROM 12 and the barcode display program and the barcode generation program may be stored in the data memory 14.

Next, barcode images generated by the portable terminal 10 as a barcode generation device according to the first embodiment will be described.

The portable terminal 10 according to the first embodiment generates a plurality of barcode images (display images) in which noise is superimposed on the basic barcode and sequentially displays the plurality of barcode images repeatedly. A scanner of a barcode reader reads the plurality of sequentially displayed display images as images combined at scan timings. The barcode reader can read a barcode in which regions without noise are combined when the scan timings are correct. Thus, the portable terminal 10 can display the barcode image in which the individual display images are undecodable and cause the barcode reader to read the barcode without noise.

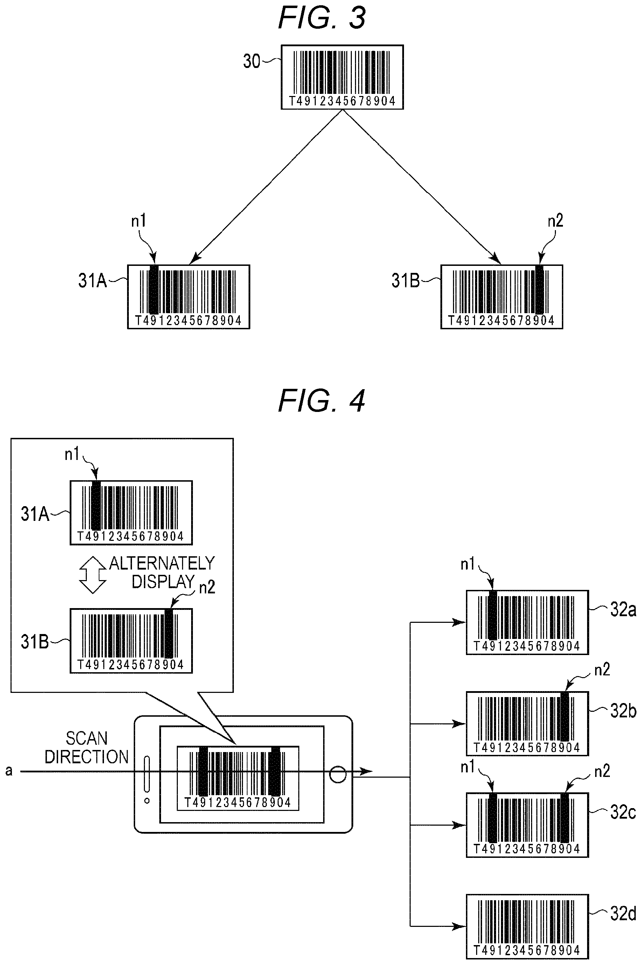

FIG. 3 is a diagram illustrating examples of a plurality of barcode images (display images) 31A and 31B generated by superimposing noise in a basic barcode 30.

The barcode image 31A is a first display image generated by superimposing noise on one portion on the left side of the basic barcode 30. The barcode image 31B is a second display image generated by superimposing noise on one portion on the right side of the basic barcode 30. When a portion without noise in the barcode image 31A and a portion without noise in the barcode image 31B are scanned, the basic barcode 30 without noise is read.

FIG. 4 is a diagram illustrating a relationship between display control of the plurality of barcode images 31A and 31B in which noise is superimposed and scanned images 32a to 32d which are scan results.

The portable terminal 10 alternately displays the barcode images 31A and 31B on the display 17. A scanner (barcode reader) that scans a display screen of the display 17 in a predetermined direction (direction a) reads the barcode images 31A and 31B as a combined image at a scan timing. That is, the images (scanned images) read by the barcode reader can be several patterns in accordance with a relationship between a display timing of each display image on the display 17 and a scan timing.

FIG. 4 illustrates examples of scanned images 32a to 32d obtained by the barcode reader (the scanner).

The scanned image 32a is an image in which noise n1 on the left side is superimposed on the basic barcode 30. The scanned image 32a is a result obtained when only the barcode image 31A is read. The scanned image 32a is undecodable by the barcode reader due to the noise n1.

The scanned image 32b is an image in which noise n2 on the right side is superimposed on the basic barcode 30. The scanned image 32b is a result obtained when only the barcode image 31B is read. The scanned image 32b is undecodable by the barcode reader due to the noise n2.

The scanned image 32c is an image in which the noise n1 on the left side and the noise n2 on the right side are superimposed on the basic barcode 30. The scanned image 32c is a result read by combining a region including noise in the barcode image 31A (a region on the left side of the barcode image 31A) and a region including noise in the barcode image 32B (a region on the right side of the barcode image 31B) . The scanned image 32c is undecodable by the barcode reader due to the noise n1 and the noise n2.

The scanned image 32d is an image in which no noise is included in the basic barcode 30. The scanned image 32d is a result read by combining a region including no noise in the barcode image 31A (a region on the right side of the barcode image 31A) and a region including no noise in the barcode image 32B (a region on the left side of the barcode image 31B) . Since the scanned image 32d includes no noise and is the read basic barcode, the scanned image 32d is decodable by the barcode reader.

The barcode reader performs scanning again when the scanned images 32a, 32b, and 32c are undecodable due to noise. That is, within a predetermined time, the barcode reader repeats the scanning until the scanned image 32d (that is, a decodable barcode) is read as a barcode image without noise. As a result, the barcode reader can read a correct barcode (decodable barcode) from the barcode image in which two pieces of noise alternately displayed on the display 17 are superimposed. The portable terminal 10 alternately displays the plurality of barcode images (display images) 31A and 31B on the display 17 so that the barcode reader can read the scanned image 32d.

In general, a decoded result of the scanned image is determined with check digits included in the barcode. Therefore, when noise triggers an incorrect reading even in the scanned image with noise, there is a possibility that check digits are read at a low probability. For example, in WPC, C/D matches and reading is achieved at a probability of 1/10 even in a misreading result in some cases. That is, when random noise is simply added to the basic barcode, there is a possibility of the barcode reader performing misreading in an image with noise.

Therefore, the barcode generation device according to the first embodiment checks whether there is misreading in a plurality of barcode images in which noise is superimposed and an image in which the plurality of barcode images are combined. The portable terminal 10 checks whether there is misreading in the barcode image 31A, the barcode image 31B, and a combined image in which the barcode images 31A and 31B are combined. Thus, by displaying a barcode image in which noise is superimposed on the display 17, it is possible to prevent misreading.

Next, a barcode display process in the portable terminal 10 as a barcode generation device according to the first embodiment will be described.

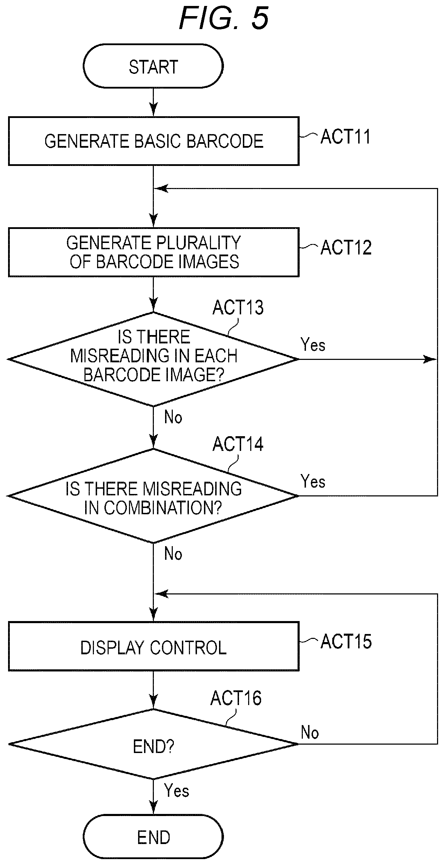

FIG. 5 is a flowchart illustrating an operation example of the barcode display process in the portable terminal 10.

The processor 11 of the portable terminal 10 generates a basic barcode which is read by the barcode reader when a barcode is displayed on the display 17 (ACT11). For example, the processor 11 acquires information (barcode information) which is read by the barcode reader. For example, the barcode information may be information stored in the data memory 14 or the like, may be information acquired from an external device or the like, or may be information generated through arithmetic processing by the processor 11.

When the basic barcode is generated, the processor 11 generates a plurality of barcode images (display images) by superimposing noise on the basic barcode (ACT12). The processor 11 generates the plurality of barcode images in which noise is superimposed at different positions on the basic barcode in a scanning direction of the barcode reader. For example, in the example illustrated in FIG. 3, the processor 11 generates the barcode image 31A in which noise is superimposed in a region on the left side and the barcode image 31B in which noise is superimposed in a region on the right side on the basic barcode 30.

After the plurality of images in which the noise is superimposed are generated, the processor 11 checks whether there is a possibility of misreading in the generated individual barcode images (ACT13) . When it is determined that there is a possibility of the misreading in any barcode image (YES in ACT13), the process returns to ACT12 and the processor 11 generates a plurality of barcode images in which noise is superimposed at different positions.

When it is determined that there is no misreading in any barcode image (NO in ACT13), the processor 11 determines whether there is a possibility of misreading in an image (scanned image) when the plurality of barcode images are combined and read (ACT14). When it is determined that there is a possibility of misreading in any scanned image (YES in ACT14), the process returns to ACT12 and the processor 11 generates a plurality of barcode images in which noise is superimposed at different positions.

When it is determined that there is no misreading in the scanned image in which the plurality of barcode images are combined (NO in ACT14), the processor 11 performs display control such that the plurality of barcode images are sequentially displayed on the display 17 (ACT15) . For example, as illustrated in FIG. 4, the barcode image 31A as a first display image and the barcode image 31B as a second display image are alternately displayed on the display 17. The processor 11 sequentially switches and displays the barcode images 31A and 31B at timings at which the barcode reader can continuously scan the region on the right side of the barcode image 31A and the region on the left side of the barcode image 31B.

When the plurality of barcode images is sequentially displayed on the display 17, the processor 11 receives an instruction to end the display of the barcode (ACT16) . Until the instruction to end the display of the barcode is received (NO in ACT16), the processor 11 continues the display control of the plurality of barcode images. Conversely, when the instruction to end the display of the barcode is received (YES in ACT16), the processor 11 ends the series of the barcode display process. For example, the processor 11 may receive an instruction to end the display of the barcode as an instruction from a user detected by the touch sensor 18. The processor 11 may set a display time of the barcode and determine the end of the display of the barcode at a time point at which the display time elapses from display start.

As described above, the portable terminal as the barcode generation device according to the first embodiment generates the plurality of barcodes in which noise is superimposed at different positions on the basic barcode. The portable terminal determines whether there is misreading when the barcode reader scans a screen on which the plurality of barcodes generated with the superimposed noise are sequentially displayed. When it is determined that there is no misreading, the portable terminal sequentially displays the plurality of barcodes generated with the superimposed noise on the screen.

Thus, according to the first embodiment, it is possible to provide a portable terminal as the barcode generation device capable of preventing illegal use of a barcode displayed on a screen while reducing the risk of misreading.

### (Modification Example of First Embodiment)

Next, a modification example of the above-described first embodiment will be described.

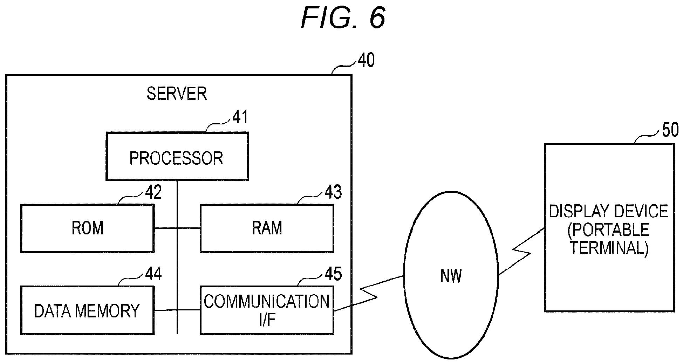

FIG. 6 is a block diagram illustrating a configuration example of a server 40 as a barcode generation device according to a modification example of the first embodiment.

In the modification example of the first embodiment, the server 40 communicates with a display device such as a portable terminal and generates a plurality of barcode images in which noise is superimposed in response to a request from the display device. Further, the server 40 sequentially displays the plurality of generated barcode images on the display device. That is, the server 40 functions as a barcode generation device and controls the display of a barcode image on the display device.

As illustrated in FIG. 6, the server 40 includes a processor 41, a read-only memory (ROM) 42, a random access memory (RAM) 43, a data memory 44, and a communication interface (I/F) 45. The processor 41 is connected to the ROM 42, the RAM 43, the data memory 44, and the communication interface 45.

The processor 41 performs various processes by executing programs. The processor 41 is, for example, a central processing unit (CPU). The processor 41 realizes various processing functions by executing programs stored in the ROM 41 or the data memory 44. For example, the processor 41 communicates with the display device via the communication interface 45 by executing a communication program. The processor 41 generates an image of a barcode to be displayed on the display of the display device by executing a barcode generation program. The processor 41 displays the generated barcode image on the display of the display device by executing a barcode display program.

The ROM 42 is a non-volatile memory. The ROM 42 stores programs and data. For example, the ROM 42 stores programs such as an operating system, middleware, and applications. The ROM 42 may store data which is referred to when the processor 41 performs various processes.

The RAM 43 stores working data. The RAM 43 is a memory used as a so-called work area. The RAM 43 appropriately stores data which is referred to or data which is temporarily used when the processor 41 performs various processes.

The data memory 44 is a rewritable nonvolatile memory. The data memory 44 is configured with, for example, a memory (storage device) such as an electric erasable programmable read-only memory (EEPROM) (registered trademark), a hard disk drive (HDD), a solid-state drive (SSD), and a memory card.

The communication interface 45 is an interface (network interface) for communicating with an external device via a network. In the configuration example illustrated in FIG. 6, the communication interface 45 is an interface that communicates with the display device 50 via the network. The communication interface 45 is an example of an interface that receives an instruction to display barcode requested from the display device 50.

The display device 50 communicates with the server 40 via the network. The display device 50 is a device that displays a barcode image supplied from the server 40. The display device 50 supplies display of a barcode to the server 40 in response to an operation or the like from the user. The display device 50 may be a device capable of requesting the server 40 to display the barcode and displaying the barcode image from the server as a barcode image read with the barcode reader. For example, the display device 50 is a portable terminal such as a smartphone, a mobile phone, or a tablet PC.

Programs that are executed by the processor 41 of the server 40 are stored in the ROM 42 or the data memory 44. The programs that are executed by the processor 41 are an operating system (OS), a barcode display program, and a barcode generation program, as exemplified in FIG. 2.

The OS is a program that manages a basic operation of the server 40. The processor 41 can execute a program that is based on the OS by executing the OS.

The barcode display program is a program for displaying a barcode on the display device 50. The barcode generation program is a program for generating a barcode displayed on the display device 50. The server 40 stores a program for communicating with the display device 50, a program for operating in response to a command from the display device 50, and the like in the RAM 42 or the data memory 44.

Next, a barcode image generated by the server 40 as a barcode generation device according to a modification example of the first embodiment will be described.

The server 40 according to the modification example of the first embodiment generates a plurality of barcode images (display images) in which noise is superimposed on a basic barcode in response a request from the display device 50. The server 40 sequentially displays the plurality of generated barcode images repeatedly on the display of the display device 50. That is, the plurality of barcode images generated by the server 40 are barcode images in which noise is superimposed at different positions on the basic barcode, as exemplified in FIG. 3. The server 40 sequentially displays the plurality of barcode images in which noise is superimposed on the display device 50 so that the scanned images illustrated in FIG. 4 can be read by the barcode reader.

As in the above-described portable terminal, the server 40 checks whether there is misreading in the plurality of barcode images in which noise is superimposed and an image in which the plurality of barcode images are combined. The server 40 checks whether there is misreading in the individual barcode images and the combined image in which the plurality of barcode images 31A are combined. Thus, the server 40 prevents misreading due to a barcode image displayed on the display device 50.

Net, a barcode display process in the server 40 serving as the barcode generation device according to the modification example of the first embodiment will be described.

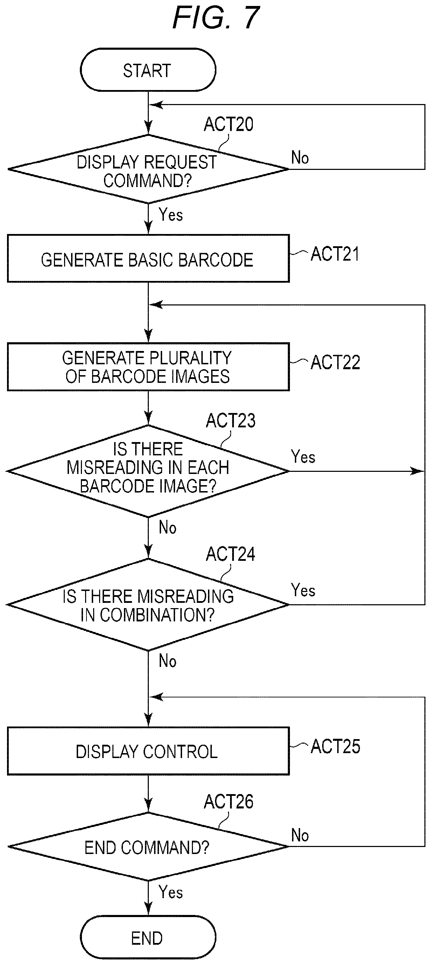

FIG. 7 is a flowchart illustrating an operation example of the barcode display process in the server 40.

The processor 41 of the server 40 receives a barcode display request from the display device 50 connected via the network (ACT20). When a command for the barcode display request is received from the display device 50 (YES in ACT20), the processor 41 generates a basic barcode that is displayed on the display device 50 and is read by the barcode reader (ACT21). The processor 41 acquires information regarding the barcode to be displayed (information indicated by the basic barcode) in response to the request from the display device 50 and generates the basic barcode from the acquired information. The information indicated by the basic barcode may be information stored in the data memory 44 or may be information generated through arithmetic processing by the processor 41.

When the basic barcode is generated, the processor 41 generates a plurality of barcode images (display images) by superimposing noise at different positions on the basic barcode (ACT22). After generating the plurality of barcode images in which noise is superimposed, the processor 41 checks whether there is a possibility of misreading in the generated individual barcode images (ACT23) . When it is determined that there is a possibility of the misreading in any barcode image (YES in ACT23), the process returns to ACT22 and the processor 41 generates a plurality of barcode images in which noise is superimposed at different positions.

When it is determined that there is no misreading in any barcode images (NO in ACT23), the processor 41 determines whether there is a possibility of misreading in an image (scanned image) when the plurality of barcode images are combined and read (ACT24). When it is determined that there is a possibility of misreading in any scanned image (YES in ACT24), the process returns to ACT22 and the processor 41 generates a plurality of barcode images in which noise is superimposed at different positions.

When it is determined that there is no misreading in the scanned image in which the plurality of barcode images are combined (NO in ACT24), the processor 41 sequentially displays the plurality of barcode images on the display of the display device 50 (ACT25) . For example, the processor 41 supplies the barcode image (first display image) 31A and the barcode image (second display image) 31B to be displayed as a barcode to the display device 50. The processor 41 informs the display device 50 of timings at which the barcode images 31A and 31B are alternately displayed (display switch timings). Here, the processor 41 informs the display device 50 of the display switch timings at which the barcode reader can continuously scan a region on the right side of the barcode image 31A and a region on the left side of the barcode image 31B. Thus, the display device 50 alternately displays the barcode images 31A and 31B on the display 17 at the informed timings.

The processor 41 sequentially displays the plurality of barcode images on the display device 50 and receives an instruction to end the display of the barcode (ACT26). For example, the processor 41 receives a display end notification from the display device 50 while sequentially displaying the plurality of barcode images. The processor 41 may end the display of the plurality of barcode images on the display device 50 at a predetermined time from the display start. When it is determined that the display of the barcode does not end (NO in ACT26), the process returns to ACT25 and the processor 41 continues to display the plurality of barcode images. Conversely, when it is determined that the display of the barcode ends (YES in ACT26), the processor 41 ends the display of the barcode on the display device 50.

As described above, the server as the barcode generation device according to the modification example of the first embodiment communicates with the display device and generates a basic barcode in response to the request from the display device. The server generates the plurality of barcodes in which noise is superimposed at different positions on the basic barcode. The server determines whether there is misreading when the barcode reader scans a screen on which the plurality of barcodes generated with the superimposed noise are sequentially displayed. When it is determined that there is no misreading, the server sequentially displays the plurality of barcodes generated with the superimposed noise on the display device.

Thus, according to the modification example of the first embodiment, it is possible to provide a server as a barcode generation device capable of preventing illegal use of a barcode displayed on the display device while reducing the risk of misreading.

### (Second Embodiment)

Next, a second embodiment will be described.

A barcode generation device according to the second embodiment is realized as a portable terminal having the configuration described in the first embodiment. That is, the barcode generation device according to the second embodiment is assumed to be the portable terminal 10 that has the configuration illustrated in FIG. 1, as described in the first embodiment. Therefore, in the second embodiment, the configuration of the portable terminal 10 as a barcode generation device will not be described in detail.

Here, an application program stored in the ROM 12 or the data memory 14 of the portable terminal 10 according to the second embodiment is different from that of the first embodiment. For example, the ROM 12 of the portable terminal 10 according to the second embodiment stores an application program for realizing a process to be described below together with an OS.

Next, a barcode image generated by the portable terminal 10 as a barcode generation device according to the second embodiment will be described.

The portable terminal 10 according to the second embodiment splits a basic barcode into portions that are singly undecodable and generates a group of barcodes that are split (split barcodes). The portable terminal 10 sequentially displays images of the split barcodes on the display 17.

Here, the barcode reader is assumed to have a function capable of collecting barcodes read for each thin partial piece and decoding the partial pieces as one barcode (a split reading function) . The split reading function is equipped in a general barcode reader. The split reading function is, for example, a function of reading a barcode attached to a location at which reading is difficult, such as a baglike article. The barcode reader that has the split reading function can read split barcodes sequentially displayed on the display 17 and combine the split barcodes to decode all the barcodes. In the second embodiment, the barcode reader that reads images of barcodes displayed on the display 17 is assumed to have the split reading function in the description.

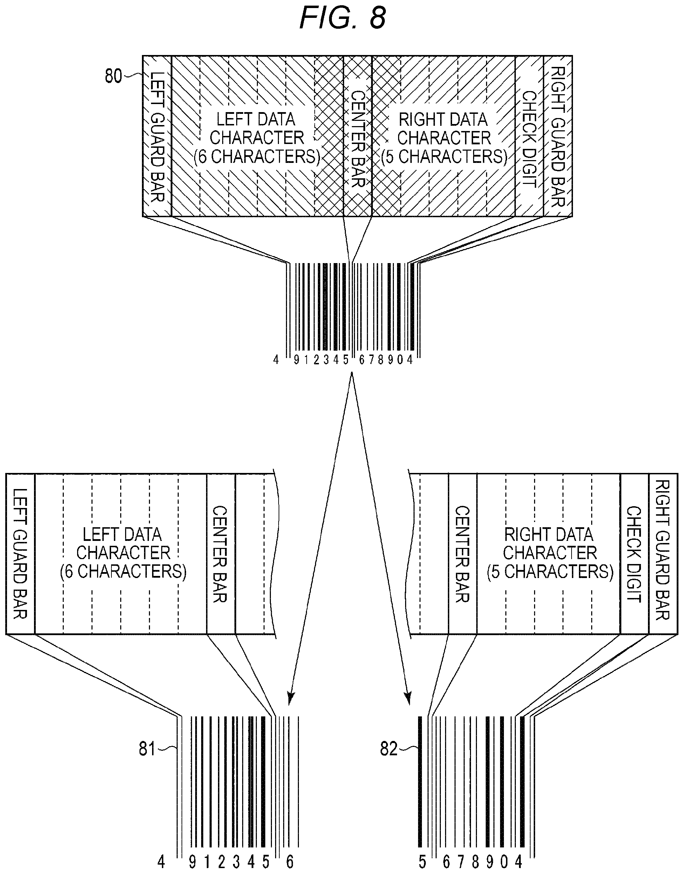

FIG. 8 is a diagram illustrating a first example of split barcodes 81 and 82 generated from a basic barcode 80.

FIG. 8 illustrates an example in which a basic barcode 80 is split into two split barcodes 81 and 82. The example illustrated in FIG. 8 is an example of 2-splitting by half segments. In FIG. 8, the half segment is a segment including a center bar and one character from a guard bar. As illustrated in FIG. 8, the split barcode 81 is configured to include a region on the left side of the basic barcode 80. The split barcode 82 is configured to include a region on the right side of the basic barcode 80. The spit barcodes 81 and 82 are configured so that partial regions overlap. In the example illustrated in FIG. 8, the two split barcodes 81 and 82 are generated so that the spit barcodes overlap by one character including the center bar before and after the center bar.

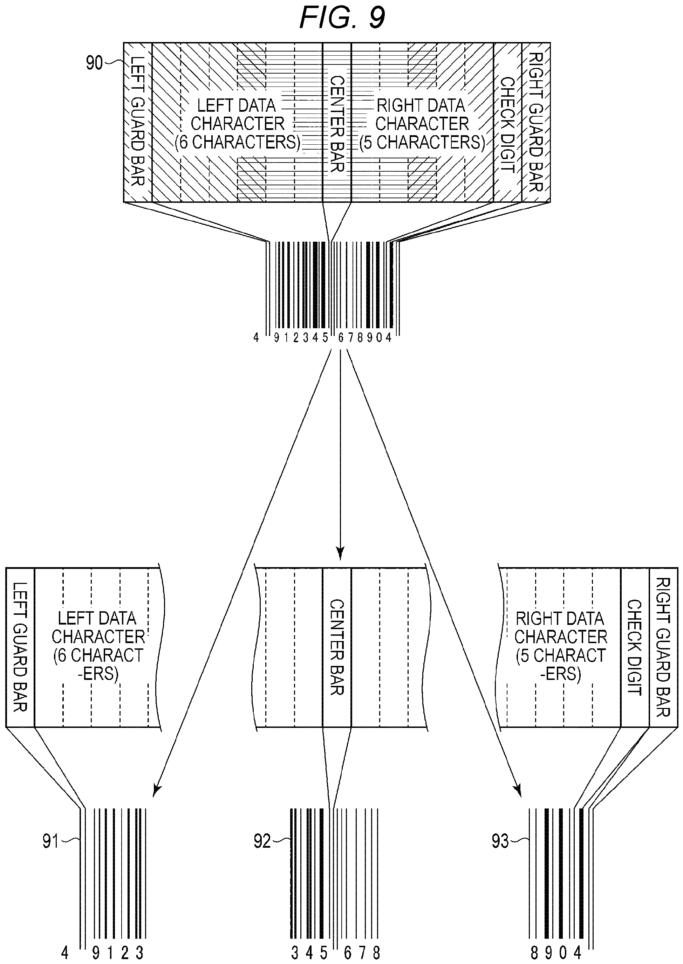

FIG. 9 is a diagram illustrating a second example of split barcodes 91, 92, and 93 generated from a basic barcode 90.

FIG. 9 illustrates an example in which the basic barcode 90 is split into three split barcodes 91, 92, and 93. The example illustrated in FIG. 9 is an example of 3-splitting by partial segments. In FIG. 9, the partial segment is a segment of a guard bar or several characters including a center bar. As illustrated in FIG. 9, the split barcode 91 is configured to include a region on the left side of the basic barcode 90. The split barcode 92 is configured to include a region near the middle of the basic barcode 90. The split barcode 93 is configured to include a region on the right side of the basic barcode 90.

The split barcodes 91 and 92 are configured so that partial regions overlap. In the specific example illustrated in FIG. 9, the split barcodes 91 and 92 are configured to overlap by one character in the left data characters. The split barcodes 92 and 93 are configured so that partial regions overlap. In the specific example illustrated in FIG. 9, the split barcodes 92 and 93 are configured to overlap by one character in the right data characters.

The plurality of split barcodes generated from the basic barcode is configured so that adjacent partial regions of the basic barcode mutually overlap. The regions in which the split barcodes mutually overlap can appropriately be set. The individual split barcodes may be configured to be singly undecodable. Therefore, the split barcodes of the adjacent regions may be configured to overlap in the regions by a plurality of characters.

The split barcodes are configured to be each singly undecodable. Therefore, the split barcodes displayed on the display 17 by the portable terminal 10 are singly undecodable. When the individual split barcodes displayed on the display are unusable, images (split barcodes) displayed on the display cannot be used illegally although the images are captured. Since the split barcodes are cuts from the basic barcode and are generated without superimposing noise, it is possible to reduce the risk of misreading in the individual split barcodes .

Next, a barcode display process in the portable terminal 10 as a barcode generation device according to the second embodiment will be described.

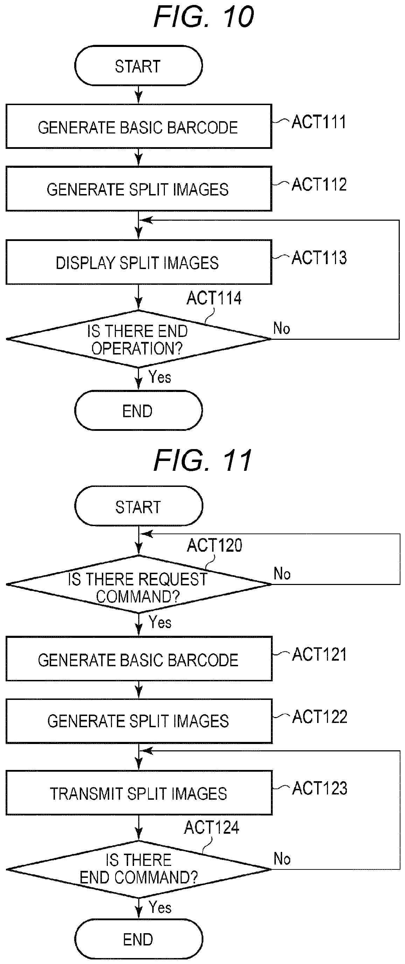

FIG. 10 is a flowchart illustrating an operation example of the barcode display process in the portable terminal 10 according to the second embodiment.

The processor 11 of the portable terminal 10 generates a basic barcode which is read by the barcode reader when a barcode is displayed on the display 17 (ACT111). When the basic barcode is generated, the processor 11 splits the basic barcode to generate a plurality of split barcodes (split images) (ACT112) .

The processor 11 splits the basic barcode into a plurality of regions to generate the split barcodes including overlap portions with regions adjacent to the split regions, and a splitting number may be within a range which can be read by the barcode reader. For example, when the splitting number is 2, the processor 11 splits the basic barcode into two half segments to generate two split barcodes. When the splitting number is 3, the processor 11 splits the basic barcode into three partial segments to generate three split barcode images.

After the split barcodes are generated, the processor 11 sequentially displays the images of the plurality of split barcodes on the display 17 (ACT113). The split barcodes sequentially displayed on the display are sufficient as long as respective images can be sequentially read by the barcode reader. Accordingly, the processor 11 displays the images of the respective split barcodes so as to be sequentially read by the barcode reader.

When the split barcode images are sequentially displayed on the display 17, the processor 11 receives an instruction to end the display of the barcode (ACT114). Until the instruction to end the display of the barcode is received (NO in ACT114), the processor 11 continues the sequential display control of the plurality of split barcode images. Conversely, when the instruction to end the display of the barcode is received (YES in ACT114), the processor 11 ends the series of the barcode display process. For example, the processor 11 receives an instruction to end the display of the barcode as a user instruction detected by the touch sensor 18. The processor 11 may set a display time of the barcode and determine the end of the display of the barcode at a time point at which the display time elapses from display start.

As described above, the portable terminal as a barcode generation device according to the second embodiment generates a plurality of split barcodes obtained by splitting the basic barcode so that the partial regions overlap. The portable terminal sequentially displays the plurality of split barcodes on the display.

Thus, according to the second embodiment, by sequentially displaying the plurality of split barcodes, it is possible to prevent the illegal use of the barcode.

### (Modification Example of Second Embodiment)

Next, a modification example of the above-described second embodiment will be described.

A barcode generation device according to the modification example of the second embodiment is realized as a server having the configuration described in the modification example of the first embodiment. That is, the barcode generation device according to the modification example of the second embodiment is assumed to be the server 40 that has the configuration illustrated in FIG. 6 described in the first embodiment. Therefore, in the modification example of the second embodiment, the configuration of the server 40 as the barcode generation device will not be described in detail.

Here, an application program stored in the ROM 42 or the data memory 44 of the server 40 according to the modification example of the second embodiment is different from that of the modification example of the first embodiment. For example, the ROM 42 of the server 40 according to the modification example of the second embodiment stores an application program for realizing a process to be described below together with an OS.

The processor 41 of the server 40 according to the modification example of the second embodiment generates a plurality of split barcode images (display images) generated by splitting a basic barcode in response to a request from the display device 50. The processor 41 of the server 40 sequentially displays the generated split barcode images on the display of the display device 50 repeatedly. The plurality of split barcode images generated by the processor 41 may be the barcode images exemplified in FIG. 8 or 9 or the like.

Next, a barcode display process in the server 40 as a barcode generation device according to the modification example of the second embodiment will be described.

FIG. 11 is a flowchart illustrating an operation example of the barcode display process in the server 40.

The processor 41 of the server 40 receives a barcode display request from the display device 50 connected via the network (ACT120). When a command for the barcode display request is received from the display device 50 (YES in ACT120), the processor 41 generates a basic barcode that is displayed on the display device 50 and is read by the barcode reader (ACT121) . The processor 41 acquires information regarding the barcode to be displayed (information indicated by the basic barcode) in response to the request from the display device 50 and generates the basic barcode from the acquired information. The information indicated by the basic barcode may be information stored in the data memory 44 or may be information generated through arithmetic processing by the processor 41.

When the basic barcode is generated, the processor 41 splits the basic barcode to generate a plurality of split barcode images (display images) (ACT122). After generating the plurality of split barcode images, the processor 41 sequentially displays the plurality of split barcode images on the display of the display device 50 (ACT123) . For example, the processor 41 displays the plurality split barcode images on the display device 50 by sequentially delivering the split barcode images to the display device 50. The processor 41 may collectively supply the plurality of split barcode image to the display device 50 and the display device 50 may sequentially display the split barcode images.

The processor 41 sequentially displays the plurality of barcode images on the display device 50 and receives an instruction to end the display of the barcode (ACT124). For example, the processor 41 receives an end command requesting a display end from the display device 50 while sequentially displaying the plurality of barcode images. When it is determined that the display of the barcode does not end (NO in ACT124), the process returns to ACT123 and the processor 41 continues the display of the plurality of barcode images. Conversely, when it is determined that the display of the barcode ends (YES in ACT124), the processor 41 ends the display of the barcode on the display device 50.

As described above, the server as the barcode generation device according to the modification example of the second embodiment communicates with the display device and generates a basic barcode in response to the request from the display device. The server generates a plurality of split barcodes obtained by splitting the basic barcode so that partial regions overlap. The server sequentially displays the plurality of split barcodes on the display device.

Thus, according to the second embodiment, by sequentially displaying the plurality of split barcodes, it is possible to prevent the illegal use of the barcode.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scopeof the inventions. The accompanying claims and their equivalents are intended to cover such forms or modifications as would fall within the scope of the inventions.

## Claims

1. A barcode generation device, comprising:
an interface configured to receive a barcode display instruction; and
a processor configured to
generate a basic barcode in response to the barcode display instruction received by the interface,
generate a plurality of barcodes in which noise is superimposed at different positions on the basic barcode,
determine whether there is a misreading in an image scanned by a barcode reader on a screen on which the plurality of barcodes are sequentially displayed, and
sequentially display the plurality of barcodes on a display device when a determination indicates that there is no misreading.

2. The device according to claim 1, wherein to determine whether there is the misreading comprises
to determine whether there is misreading in each of images of a plurality of barcodes in which the noise is superimposed, and
to determine whether there is misreading in a combined image which is obtained when the plurality of sequentially displayed barcodes are scanned.

3. A barcode generation device, comprising:
an interface configured to receive a barcode display instruction; and
a processor configured to
generate a basic barcode in response to the barcode display instruction received by the interface,
generate a split barcode image group in which the basic barcode is split into a plurality of images that are singly undecodable, and
sequentially display the split barcode image group on a display device.

4. The device according to claim 3, wherein the split barcode image group comprises an image group in which the basic barcode is split so that partial regions overlap between adjacent regions.

5. The device according to any one of claims 1 to 4, wherein the basic barcode is generated so as to be decodable by a barcode reader.

6. The device according to any one of claims 1 to 5, wherein the split barcode image group is generated so as to be undecodable by a barcode reader.

7. The device according to any one of claims 1 to 6, wherein the display device is a smartphone.

8. A barcode generation method, comprising:
generating, by a processor, a basic barcode in response to a barcode display instruction received;
generating, by a processor, a plurality of barcodes in which noise is superimposed at different positions on the basic barcode;
determining, by a processor, whether there is a misreading in an image scanned by a barcode reader on a screen on which the plurality of barcodes are sequentially displayed; and
sequentially displaying the plurality of barcodes on a display device when a determination indicates that there is no misreading.

9. The barcode generation method according to claim 8, further comprising:
determining, by a processor, whether there is a misreading in each of images of a plurality of barcodes in which the noise is superimposed, and
determining, by a processor, whether there is a misreading in a combined image which is obtained when the plurality of sequentially displayed barcodes are scanned.
